# EUROPÄISCHE PATENTANMELDUNG

(11) **EP 3 318 512 A1**
(43) Veröffentlichungstag der Anmeldung: **09.05.2018**
(21) Anmeldenummer: 16197472.0
(22) Anmeldetag: 07.11.2016
(51) Int. Cl.: B65G 1/137, B65B 5/04

(54) **VERFAHREN ZUR LAGERUNG UND KOMMISSIONIERUNG VON ARTIKELN, INSBESONDERE KLEINTEILEN**

(71) Anmelder: WITRON Logistik + Informatik GmbH, 92711 Parkstein (DE)
(72) Erfinder: Winkler, Walter, 92711 Parkstein (DE)
(74) Vertreter: Betten & Resch

(57) **Zusammenfassung**

Ein Verfahren zur Lagerung und Kommissionierung von Artikeln, insbesondere von Kleinteilen, weist die Verfahrensschritte auf:
a) Verpackung der Artikel in standardisierten Verpackungsmodulen (50) ausgewählt aus einer Anzahl verschiedener vordefinierter Verpackungsmodul-Typen mit unterschiedlichen Grundflächenmaßen einer bestimmten Rasterung,
b) Lagerung der in den standardisierten Verpackungsmodulen (50) verpackten Artikel in einem Komissionierlager (20),
c) Zusammenstellung der Artikel entsprechend einem erfassten Kommissionierauftrag, wobei eines oder mehrere der Verpackungsmodule (50) zu einer Versandverpackung (55) miteinander verbunden werden, und
d) Versand der Artikel in der Versandverpackung (55) entsprechend dem erfassten Kommissionierauftrag.

Die Erfindung ermöglicht eine Reduzierung der Menge des verwendeten Verpackungsmaterials und eine erhöhte Lagerdichte.

## Beschreibung

### Gebiet der Erfindung

Die Erfindung betrifft ein Verfahren zur Lagerung und Kommissionierung von Artikeln, insbesondere von Kleinteilen.

### Hintergrund der Erfindung

Aus ökologischen und finanziellen Gründen ist es beim Versand von Waren wünschenswert, den Verbrauch von Verpackungsmaterial zu minimieren und eine möglichst hohe Packungsdichte in den Versandkartons zu erreichen. Dies ist derzeit insbesondere beim kleinteiligen Versandhandel wie etwa im Ersatzteil-Handel sowie im Endkunden-Versand bei Verwendung von vorgefertigten Versandkartons nicht gegeben, da diese Kartons naturgemäß nicht optimal auf alle möglichen versendeten Artikel bzw. Versandaufträge zugeschnitten sein können.

Aufgabe der vorliegenden Erfindung ist es daher, ein Verfahren zur Lagerung und Kommissionierung von Artikeln, insbesondere von Kleinteilen, vorzuschlagen, bei dem der Verbrauch von Verpackungsmaterial reduziert und die Packungsdichte erhöht wird.

### Zusammenfassung der Erfindung

Erfindungsgemäß wird diese Aufgabe gelöst durch ein Verfahren zur Lagerung und Kommissionierung von Artikeln, insbesondere von Kleinteilen, aufweisend die Verfahrensschritte (a) Verpackung der Artikel in standardisierten Verpackungsmodulen ausgewählt aus einer Anzahl verschiedener vordefinierter Verpackungsmodull-Typen mit unterschiedlichen Grundflächenmaßen einer bestimmten Rasterung, (b) Lagerung der in den standardisierten Verpackungsmodulen verpackten Artikel in einem Komissionierlager, (c) Zusammenstellung der Artikel entsprechend einem erfassten Kommissionierauftrag, wobei eines oder mehrere der Verpackungsmodule zu einer Versandverpackung miteinander verbunden werden, und (d) Versand der Artikel in der Versandverpackung entsprechend dem erfassten Kommissionierauftrag.

Die vorliegende Erfindung ermöglicht es, ein und dieselbe standardisierte Verpackung vom Herstellungsort des Artikels über die Lagerung und Kommissionierung bis zur Auslieferung beim Endkunden zu verwenden. Dadurch entfällt eine Umverpackung des Artikels; es kann Verpackungsmaterial eingespart werden. Die standardisierten Verpackungsmodule werden aus einer Anzahl verschiedener vordefinierter Verpackungsmodul-Typen mit unterschiedlichen Grundflächenmaßen einer bestimmten Rasterung passend zur Artikelgröße ausgewählt, so dass eine hohe Packungsdichte und damit ein minimierter Verpackungsmaterialverbrauch erreichbar ist. Darüber hinaus wird durch die Verwendung standardisierter Verpackungsmodule die automatisierte Lagerung und Kommissionierung erheblich erleichtert, wodurch Kosten eingespart werden können.

Vorzugsweise werden mehrere Verpackungsmodule des gleichen Typs oder unterschiedlicher Typen bündig zu einer quaderförmigen Versandverpackung verbunden, welche einfacher automatisiert handhabbar ist. Vorzugsweise wobei die mehreren Verpackungsmodule dabei durch Verkleben oder Umwickeln miteinander verbunden.
in den Zwischenräumen zwischen miteinander verbundenen Verpackungsmodulen können dabei vorzugsweise Begleitpapiere wie Lieferscheine, Werbematerial etc. untergebracht werden.

Die verschiedenen Verpackungsmodul-Typen weisen Grundflächenmaße mit einer bestimmten Rasterung der Seitenlängen auf, welche festgelegte Werte L₁, L₂, L₃, ..., Lₙ annehmen können. Dabei sind die verschiedenen Verpackungsmodul-Typen rechteckförmig mit einer kurzen Seite der Länge A und einer langen Seite der Länge B, wobei A ausgewählt ist aus L₁, L₂, L₃, ..., Lₙ₋₁ und B ausgewählt ist aus L₂, L₂, L₄, ..., Lₙ, und wobei A < B ist. Durch diese Rasterung der Seitenlängen können Verpackungsmodule unterschiedlicher Verpackungsmodultypen vorteilhaft zu quaderförmigen, bündig abschließenden Versandpackungen zusammengefügt werden, die beim Versand einfach handhabbar sind. Eine Beschädigung der Verpackungen und der darin gelagerten Artikel wird so vermieden.

Vorzugsweise sind die Verpackungsmodule als Kartonverpackungen ausgebildet, wobei die jeweilige Höhe der Verpackungsmodule durch entsprechende Fixierung eines aufgeschobenen Kartondeckels angepasst wird. Insbesondere kann dabei zur Optimierung der Ladungsdichte die Innenhöhe des Verpackungsmoduls gleich der maximalen Höhe des darin verpackten Artikels gewählt werden.

Vorzugsweise werden die Verpackungsmodule im Lager ausschließlich liegend bewegt, so dass eine Beschädigung der Verpackungen vermieden werden kann.

Vorzugsweise befindet sich in jedem Verpackungsmodul jeweils nur ein einziger Artikel, wodurch die Lagerverwaltung vereinfacht wird.

Ein zu lagernder Artikel kann bereits beim Hersteller oder Lieferanten oder alternativ bei der Anlieferung zum Lager in ein Verpackungsmodul einer der standardisierten, vordefinierten Verpackungsmodul-Typen verpackt werden. Vorzugsweise kann eine einzige standardisierte Verpackung mit individuell angepasster Packungshöhe von der Herstellung über die Lagerung und Distribution bis zur Auslieferung an den Endkunden verwendet werden, wobei es vorteilhaft ist, möglichst viele Arbeitsschritte - insbesondere jedoch die Kommissionierung - zu automatisieren.

### Figurenbeschreibung

Die Erfindung wird nachstehend anhand von Ausführungsbeispielen unter Bezugnahme auf die Zeichnungen im Einzelnen beschrieben. Dabei zeigt:
- Fig. 1a): eine schematische Darstellung des Aufbaus eines Ausführungsbeispiels einer erfindungsgemäßen Lagervorrichtung;
- Fig. 1b): eine schematische Darstellung des Kommissionierbereichs eines Ausführungsbeispiels einer erfindungsgemäßen Lagervorrichtung;
- Fig. 2: ein Flussdiagramm eines Ausführungsbeispiels eines erfindungsgemäßen Verfahrens zur Lagerung von Artikeln;
- Fig. 3: ein Flussdiagramm weiterer Verfahrensschritte des in Fig. 2 gezeigten Ausführungsbeispiels eines erfindungsgemäßen Verfahrens zur Lagerung von Artikeln;
- Fig. 4: eine schematische Darstellung von Ausführungsbeispielen standardisierter Verpackungsmodule eines ersten und eines zweiten erfindungsgemäßen Verpackungsmodul-Typs;
- Fig. 5: eine schematische Darstellung von Ausführungsbeispielen standardisierter Verpackungsmodule eines dritten und eines vierten erfindungsgemäßen Verpackungsmodul-Typs;
- Fig. 6: eine schematische Darstellung von Ausführungsbeispielen standardisierter Verpackungsmodule eines fünften und eines sechsten erfindungsgemäßen Verpackungsmodul-Typs;
- Fig. 7: eine schematische Darstellung eines Ausführungsbeispiels eines Lagermagazins eines ersten erfindungsgemäßen Lagermagazin-Typs;
- Fig. 8: eine schematische Darstellung eines Ausführungsbeispiels eines Lagermagazins eines zweiten erfindungsgemäßen Lagermagazin-Typs;
- Fig. 9: eine schematische Darstellung eines Ausführungsbeispiels eines Lagermagazins eines dritten erfindungsgemäßen Lagermagazin-Typs;
- Fig. 10: eine schematische Darstellung eines Ausführungsbeispiels eines Lagermagazins eines vierten erfindungsgemäßen Lagermagazin-Typs;
- Fig. 11: eine schematische Darstellung eines Ausführungsbeispiels eines Lagermagazins eines fünften erfindungsgemäßen Lagermagazin-Typs;
- Fig. 12: eine schematische Darstellung eines Ausführungsbeispiels eines Lagermagazins eines sechsten erfindungsgemäßen Lagermagazin-Typs;
- Fig. 13: eine schematische Darstellung des Entnahmevorgangs eines Verpackungsmoduls aus einem erfindungsgemäßen Lagermagazin;
- Fig. 14: eine schematische Darstellung von erfindungsgemäßen Verpackungsmodulen, die zu Versandverpackungen zusammengefügt sind; und
- Fig. 16: eine schematische Darstellung zweier beispielhafter, auf Versandladungsträgern gestapelter Ladestapel erfindungsgemäßer Versandverpackungen.

### Detaillierte Beschreibung der Erfindung

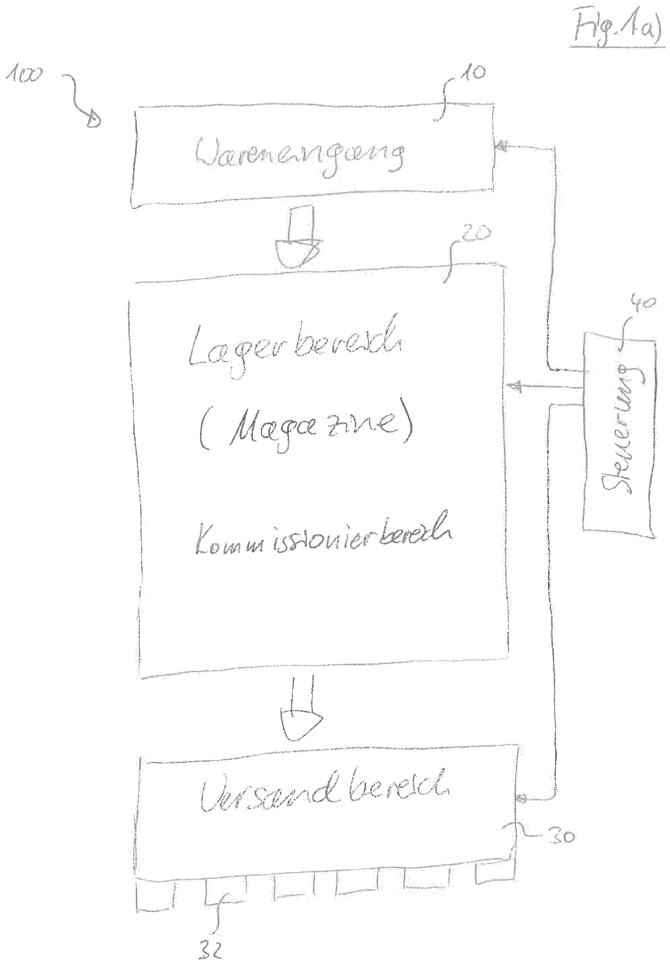

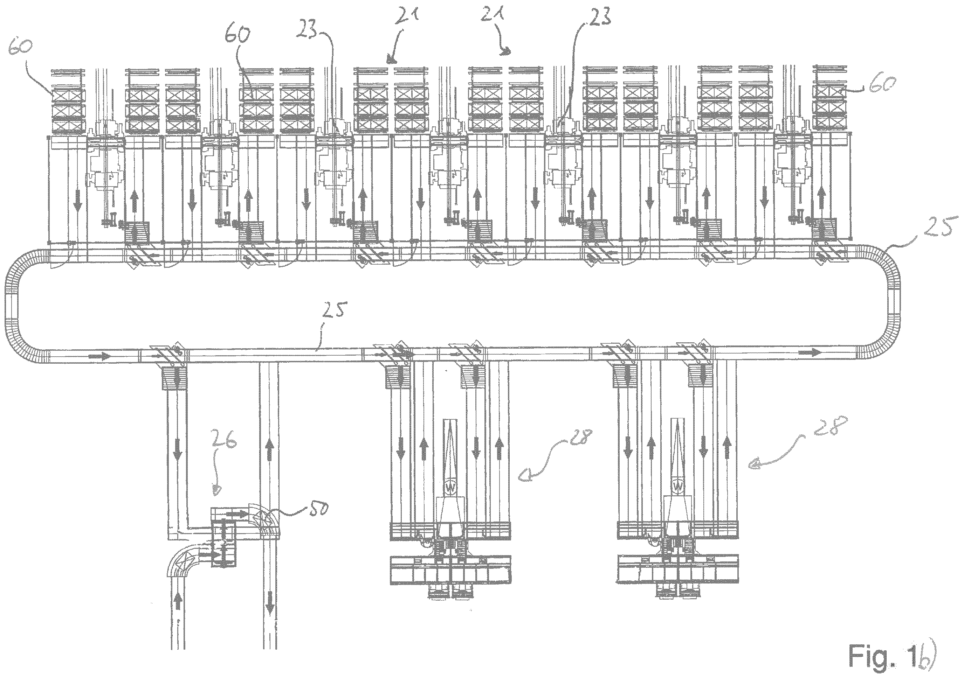

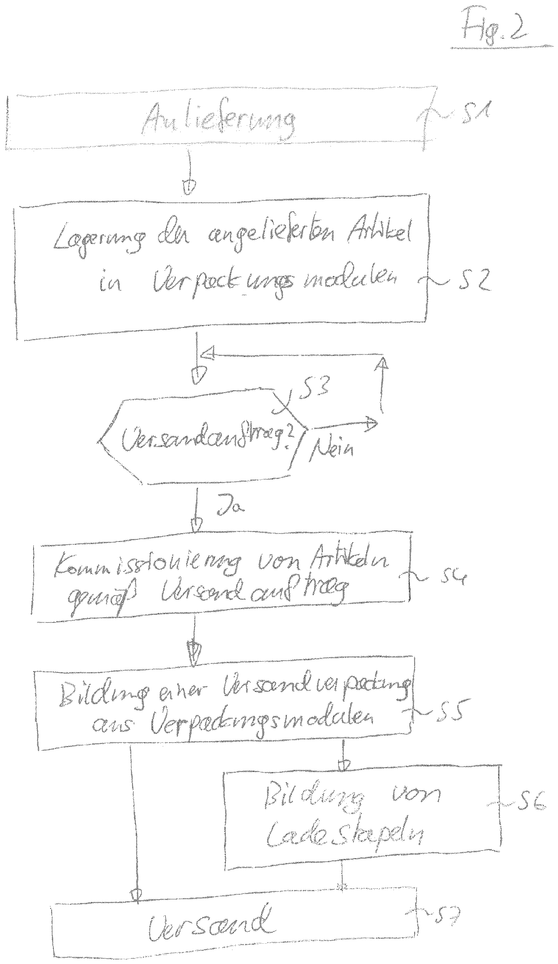

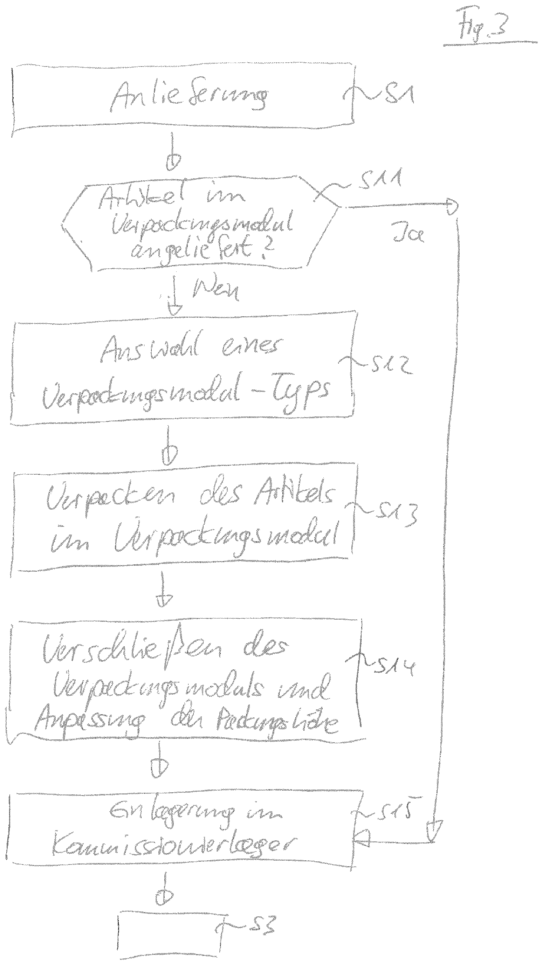

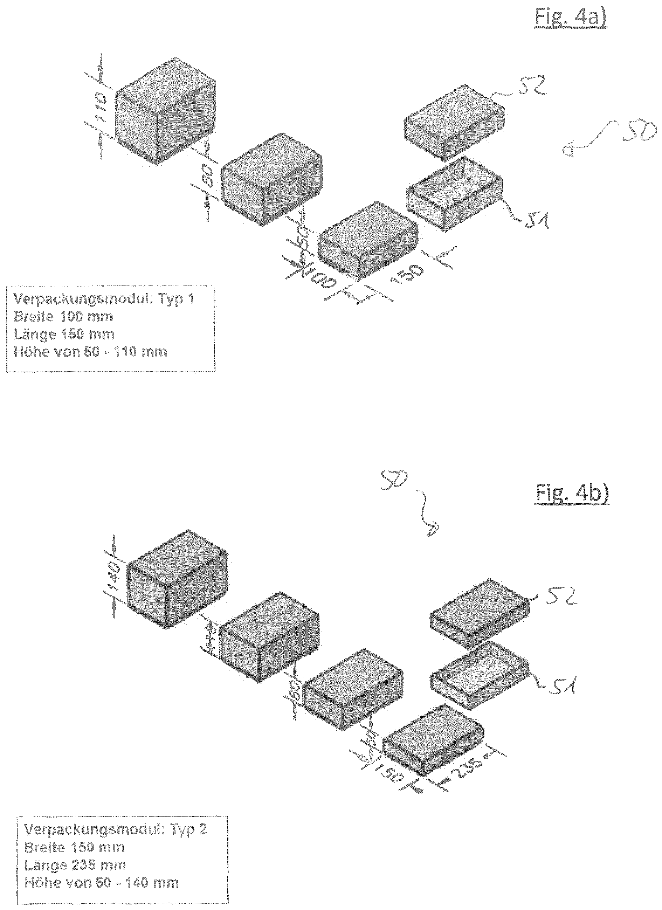

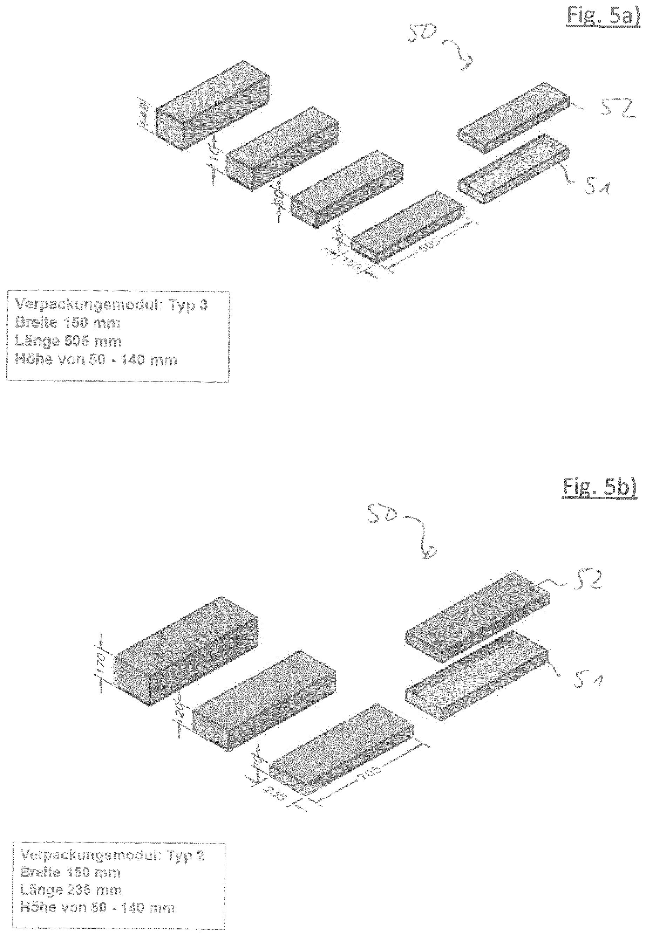

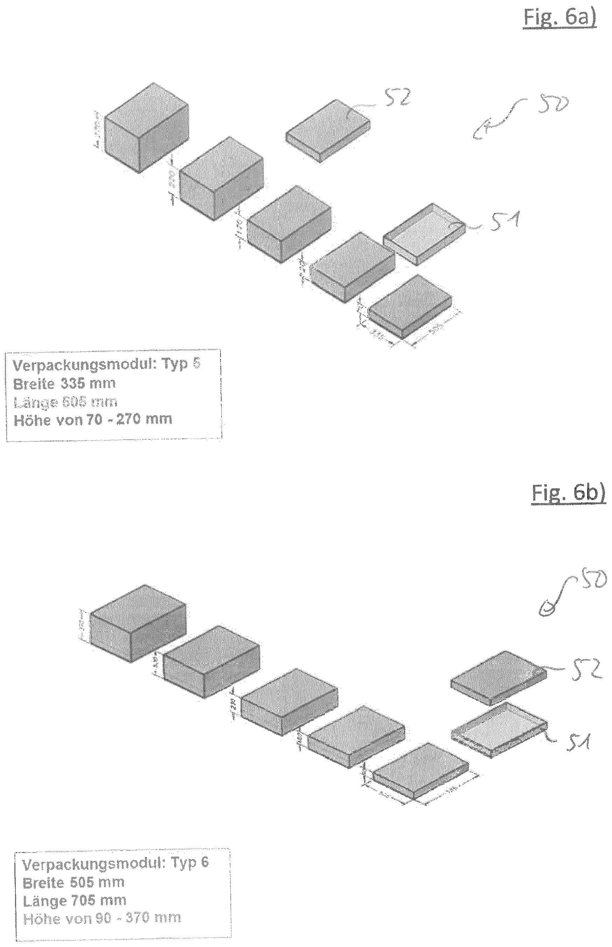

Figur 1 zeigt eine schematische Darstellung eines Ausführungsbeispiels einer erfindungsgemäßen Lagervorrichtung 100 zur Lagerung von Artikeln, insbesondere von Kleinteilen. Die Artikel werden an einem Wareneingang 10 beispielsweise per Lkw oder einem anderen geeigneten Verkehrsmittel angeliefert. Dabei können sich die die Artikel bereits in erfindungsgemäßen, standardisierten Verpackungsmodulen befinden. Ist dies nicht der Fall, werden die Artikel in derartige, erfindungsgemäße Verpackungsmodule umgepackt, wie im Detail anhand der Flussdiagramme der Fig. 2 und 3 erläutert werden wird. Die Verpackungsmodule selbst werden anhand der Figuren 4 bis 7 beschrieben.

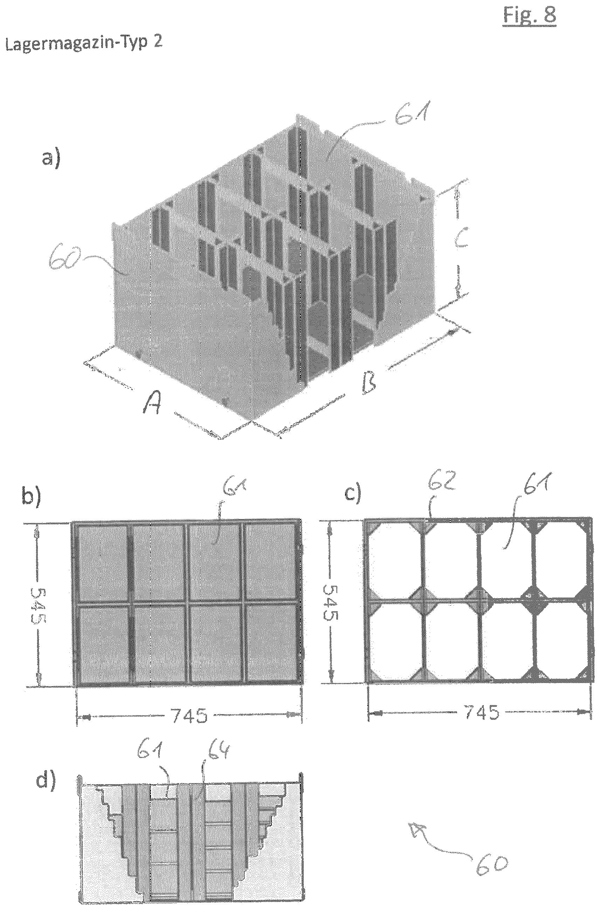

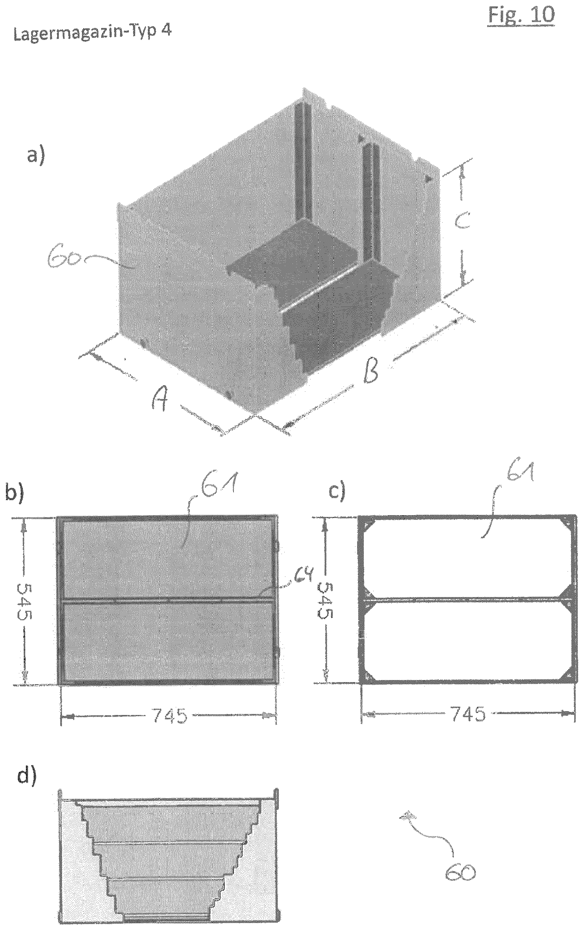

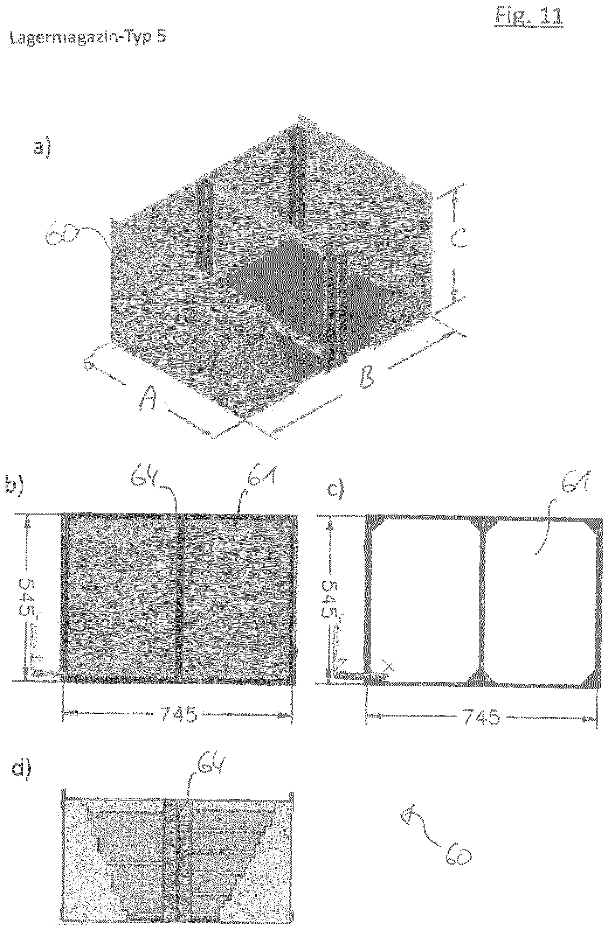

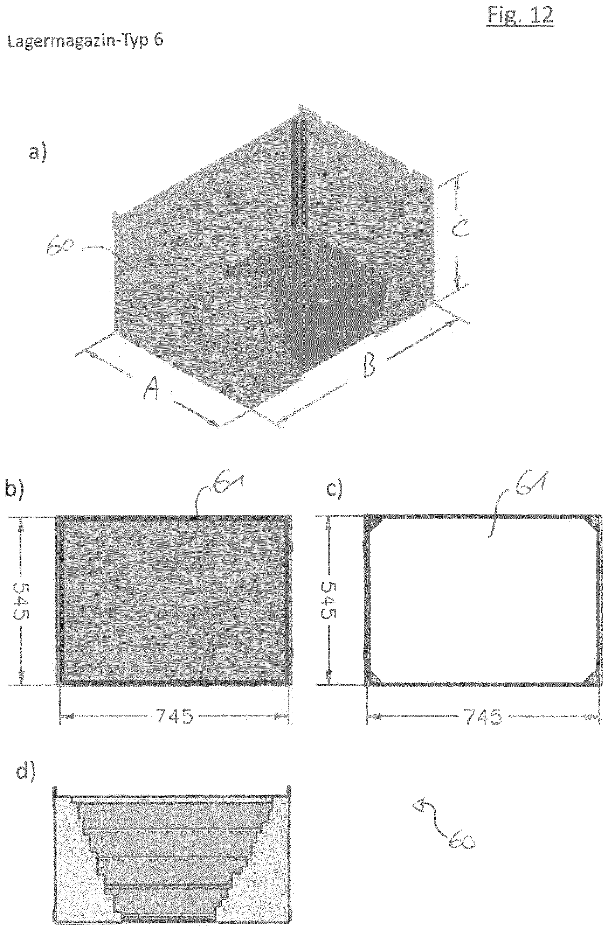

Eine vorzugsweise automatisierte Fördertechnik fördert die in den Verpackungsmodulen befindlichen Artikel in den Lagerbereich 20, in dem die Artikel in an die Maße der Verpackungsmodule 50 angepassten Lagermagazinen 60 (siehe Beschreibung mit Bezugnahme Bezug auf Fig. 8 bis 12) gelagert werden. Dadurch wird eine besonders hohe Lagerdichte erreicht.

Fig. 1b) zeigt schematisch in Aufsicht einen Teil des Lagerbereichs sowie den Kommissionierbereich eines Ausführungsbeispiels einer erfindungsgemäßen Lagervorrichtung. Die Artikel werden in Lagermagazinen 60 gelagert, die wiederum in Lagerregalen 21 untergebracht sind und durch Regalfahrzeuge 23 ein- und auslagerbar sind.

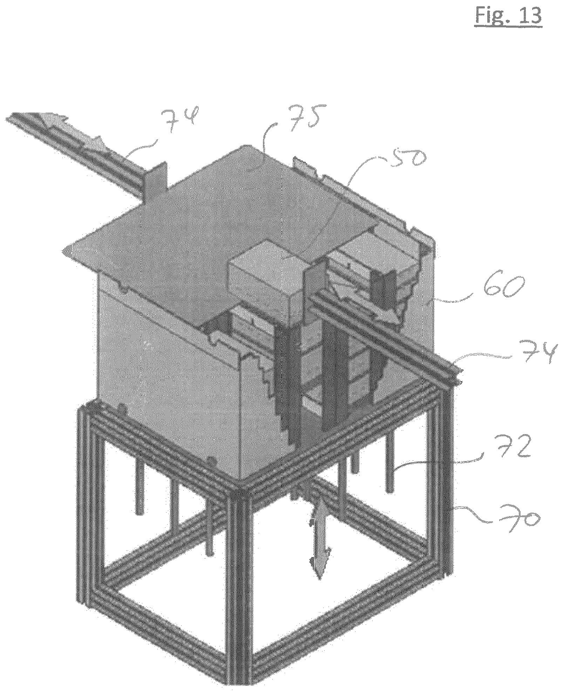

Bei Erfassung eines Versandauftrages werden die entsprechende Artikel enthaltende Lagermagazine 60 mittels eines der Regalfahrzeuge 23 aus dem jeweiligen Regal 21 entnommen, einem Kreisförderer 25 zugeführt und von dort auf eine der Kommissionierstationen 26, 28 verteilt. Bei den Kommissionierstationen 28 handelt es sich um herkömmliche Kommissionierstationen, bei denen die Artikel manuell durch einen Kommissionierer kommissioniert werden, während die Kommissionierstation 26 einen automatisierte Station ist, bei der die gewünschte Anzahl von Verpackungsmodulen mittels einer Hubeinrichtung aus dem Kommissioniermagazin entnommen wird, wie im Folgenden unter Bezugnahme auf Fig. 13 erläutert werden wird. Die vorliegende Erfindung umfasst sowohl die automatisierte als auch die manuelle Kommissionierung. Die erfindungsgemäßen Verpackungsmodule 50 sind jedoch zur Verwendung mit austomatisierten Kommissioniersystemen optimiert. Durch diese Flexibilität kann die Erfindung auch durch die Nachrüstung bestehender Logistikanlagen implementiert werden.

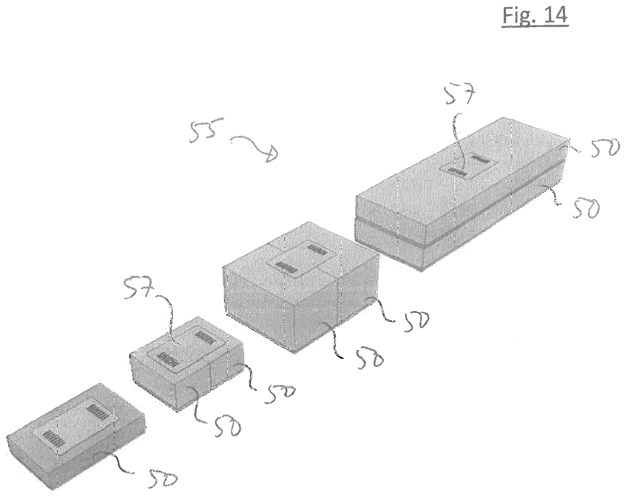

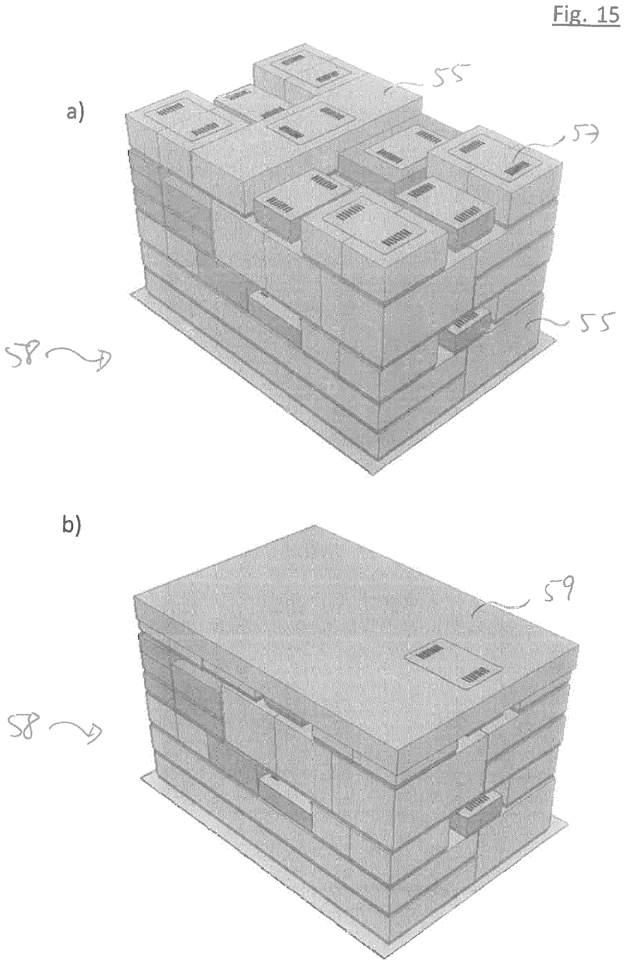

Fig. 13 zeigt schematisch ein Ausführungsbeispiel einer an einer automatischen Kommissionierstation 26 vorgesehenen Entnahmevorrichtung zur Entnahme von Verpackungsmodulen 50 aus den Ladeschächten eines Lagermagazins 60, welches auf einem Gestell 70 aufliegt. Ein Stempel oder Hubstift 72 hebt das Verpackungsmodul 50 aus dem Lagerschacht 61, wo es auf einer Förderebene 75 von einem Pusher 74 ergriffen und ohne manuelle Arbeit zur weiteren Verarbeitung weitertransportiert wird. Dabei erfolgt die Förderung eines Verpackungsmoduls 50 in der gesamten Lagereinrichtung 100 vorzugsweise liegend, d.h. das Verpackungsmodul 50 ist immer von unten unterstützt. Dadurch werden Beschädigungen des Verpackungsmoduls oder des darin gelagerten Artikels vermieden. Die so kommissionierten Verpackungsmodule 50 werden anschliessend mit einer geeigneten, vorzugsweise ebenfalls automatisierten Fördertechnik zu einem Versandbereich 30 gefördert, wo die Verpackungsmodule 50 zu Versandverpackungen 55 zusammengestellt werden (siehe spätere Beschreibung mit Bezugnahme auf Fig. 14 und 15) und an LKW-Rampen 32 ausgeliefert werden.

Die Fig. 2 und 3 sind Flussdiagramme zur Erläuterung eines Ausführungsbeispiels eines erfindungsgemäßen Verfahrens zur Lagerung von Artikeln, insbesondere Kleinteilen.

In einem ersten Verfahrensschritt S1 werden die zu lagernden Artikel (Kleinteile) angeliefert. Wie erwähnt können die Artikel sich dabei bereits in einer erfindungsgemäßen standardisierten Verpackungsmodulen 50 befinden oder nicht (Verfahrensschritt S11 in Fig. 3). Ist der Artikel bereits in einer standardisierten Verpackung, geht das Verfahren weiter zu Schritt S15, in dem das Verpackungsmodul 50 in den Lagerschacht eines Lagermagazins 60 eines dem Verpackungsmodul-Typ zugeordneten Lagermagazin-Typs eingelagert wird.

Befindet sich der angelieferte Artikel nicht in einem standardisierten Lagermodul 50, so werden die Abmessungen des Artikels mittels einer (nicht dargestellten, an sich bekannten) Messvorrichtung erfasst und es wird in Verfahrensschritt S12 ein passender Verpackungsmodul-Typ aus einer Anzahl vordefinierter Verpackungsmodul-Typen ausgewählt, die sich durch ihre Grundflächenabmessungen unterscheiden. Im darauffolgenden Verfahrensschritt S13 wird der Artikel in das Bodenteil 51 (siehe Fig. 4 bis 8) eines Verpackungsmoduls 50 des ausgewählten Verpackungsmodul-Typs gesetzt und anschließend in Schritt S14 das Deckelteil 52 des Verpackungsmoduls 50 aufgesetzt. Das Deckelteil 52 wird in der Position mittels Verklebens oder dgl. auf dem Bodenteil 51 fixiert, in der die Innenhöhe der Verpackung gerade gleich der maximalen Höhe des verpackten Artikels ist, d.h., das Deckelteil 52 sitzt auf dem Artikel auf. Dadurch wird eine minimaler Platzbedarf und somit eine maximale Lagerdichte erreicht. In Verfahrensschritt S15 wird das Verpackungsmodul dann in den Lagerschacht 61 eines Lagermagazins 60 eines dem Verpackungsmodul-Typ zugeordneten Lagermagazin-Typs eingelagert, wo dieses bis zur Erfassung eines entsprechenden Versandauftrages lagert (Verfahrensschritte S2 und S3 in Fig. 2). Bei Erfassung eines Versandauftrages werden in Schritt S4 die dem Auftrag zugehörigen Artikel automatisiert aus den Lagermagazinen 60 entnommen (siehe Fig. 13) und zu dem Gesamtauftrag zusammengestellt (kommissioniert). Dabei werden die standardisierten Lagermodule 50 auch als Versandverpackung benutzt, bzw. werden zweckmäßig mehrere Packmodule des gleichen Typs oder unterschiedlicher Typen zu Versandverpackungen 55 zusammengesetzt, wie in Fig. 14 gezeigt ist. Die Versandverpackungen 55 können in Verfahrensschritt S7 entweder einzeln versandt oder automatisiert zu versandfertigen Einheiten wie etwa Ladestapeln 58 zusammengestellt werden, wie in Fig. 15 gezeigt ist, die anschließend auf Lkw oder dgl. ausgeliefert werden. Zur Vervollständigung einer versandfertigen Einheit 55 können dabei auch leere Verpackungsmodule oder Deckelteile 59 verwendet werden.

Die Ausgestaltung der erfindungsgemäßen standardisierten Verpackungsmodule 50 ist beispielhaft in den Fig. 4 - 6 gezeigt. Ein Verpackungsmodul 50 besteht aus einem Bodenteil 51 mit einem gerasterten, standardisierten Bodenmaß und einem aufschiebbaren Deckelteil 52, dessen Fixierung am Bodenteil 51 die Höhe des Verpackungsmoduls in Abhängigkeit des gelagerten Artikels bestimmt. Die Rasterung der Bodenmaße ist so gewählt, dass einerseits die Schmalseitenlänge a eines größeren Verpackungsmodul-Typs gleich der Längsseitenlänge b eines kleineren Verpackungsmodul-Typs ist. Es gibt somit einen Satz Rastermaße L₁, L₂, L₃, ..., Lₙ, die sowohl für die Schmalseiten als auch für die Längsseiten gewählt werden. Dadurch können standardisierte Verpackungsmodule auch verschiedener Typen (Größen) zu einer bündigen Versandverpackung verbunden werden (siehe Fig. 14 und 15). Außerdem ist die Bildung von ladungsdichteoptimierten Packstapeln 58 erleichtert, wie in Fig. 15 illustriert ist. Darüber hinaus können die so gerasterten Verpackungsmodule 50 optimal in die entsprechend dimensionierten Lagermagazine 60 eingepasst werden, die jeweils unterschiedliche Einsätze 62, aber identische Außenmaße aufweisen. So wird ein flexibles Lager hoher Lagerdichte ermöglicht.

Im vorliegenden Ausführungsbeispiel sind die Rastermaße wie folgt gewählt:
L₁ = 100 mm, L₂ = 150 mm, L₃ = 235 mm, L₄ = 335 min, L₅ = 505 mm, L₆ = 705 mm.

Die minimale Länge L1 ist dabei typischerweise durch die Mindestgröße eines Etikettenaufklebers oder dgl. eines Transportdienstleisters bestimmt. Selbstverständlich ist die Erfindung jedoch nicht auf diese speziellen Maße beschränkt.

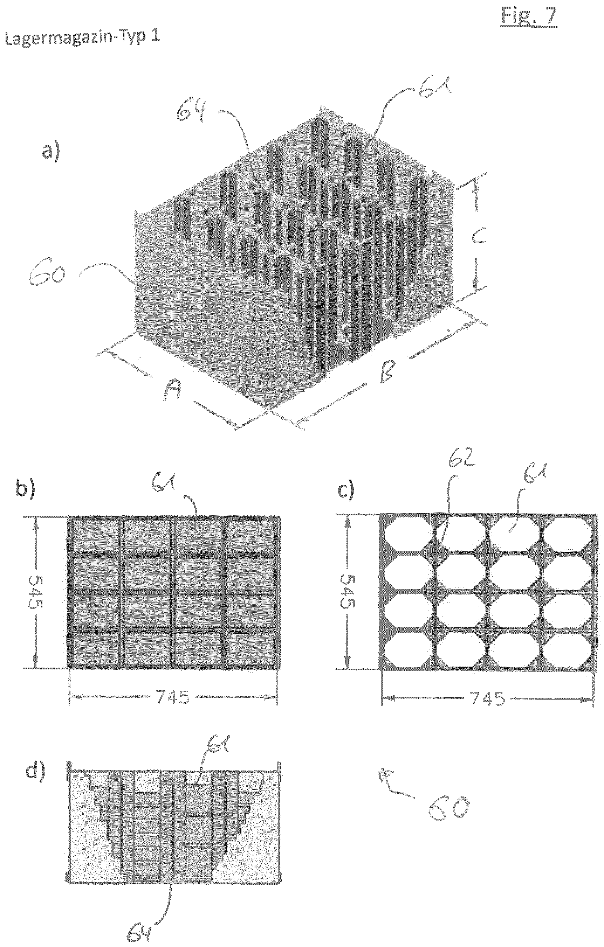

Die Fig. 7-12 zeigen schematisch Ausführungsbeispiele von erfindungsgemäßen Lagermagazinen 60 eines ersten bis sechsten Lagermagazin-Typs, die alle die gleichen Außenabmessungen haben. Die Fig. 7a) - 12a) zeigen dabei die eine perspektivische Ansicht der jeweiligen Lagermagazine, die Fig. 7b)-12b) eine Aufsicht mit eingesetzten Einsätzen 64, die Fig. 7c) - 12c) eine Aufsicht ohne Einsätze 64, und die Fig. 7c) - 12c) eine teilweise aufgeschnittene Seitenansicht. Vorzugsweise bestehen die Lagermagazine aller Lagermagazin-Typen aus dem gleichen Außenkörper, in welche unterschiedliche, an die verschiedenen Verpackungsmodul-Typen angepasste Einsätze 64 einschiebbar sind, die eine entsprechende Anzahl von Lagerschächten 61 zur Aufnahme der Verpackungsmodule 50 aufweisen. Die Einsätze 64 weisen am Boden jedes Lagerschachts 61 mit einer Öffnung versehene seitliche Halterungen 62 zum Halten des darin befindlichen Verpackungsmoduls 50 auf. Die gebildete Öffnung dient zum Herausheben des Lagermoduls mittels eines Hubstifts 72 (Fig. 13).

Durch die austauschbaren Einsätze 64 können die Lagermagazine 60 sehr flexibel an die jeweils zu lagernden Produkte angepasst werden, so dass immer eine optimale Lagerdichte erreicht wird. Durch die identische Außenmasse können mehrere Lagermagazine 60 aufeinander gestapelt werden, was wiederum die Lagerdichte erhöht. Vorzugsweise können die Lagermagazine 60 aller Lagermagazin-Typen in verschiedenen Bauhöhen zur Anpassung an unterschiedliche Artikel- und damit Verpackungshöhen vorgesehen sein.

Das in Fig. 7 gezeigte Lagermagazin 60 des ersten Lagermagazin-Typs ist so dimensioniert, dass es 16 Lagerschächte 61 aufweist, deren Grundmaße an die passgenaue Aufnahme jeweils eines Verpackungsmoduls des Typs 1 mit Grundflächenmassen von 100 mm x 150 mm angepasst ist.

Entsprechend ist das in Fig. 8 gezeigte Lagermagazin 60 des zweiten Lagermagazin-Typs so dimensioniert, dass es 8 Lagerschächte 61 aufweist, deren Grundmaße an die passgenaue Aufnahme jeweils eines Verpackungsmoduls des Typs 2 mit Grundflächenmassen von 150 mm x 235 mm angepasst ist.

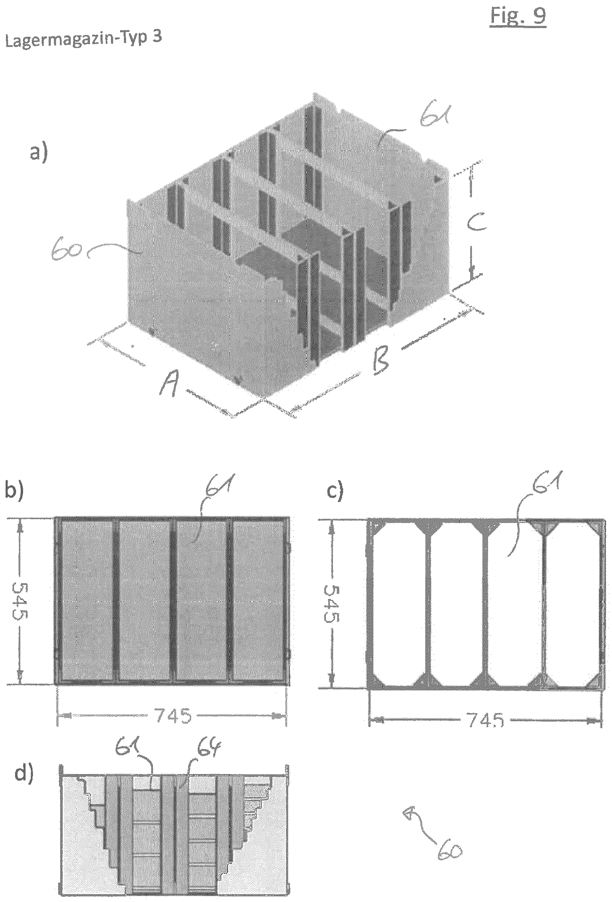

Entsprechend ist das in Fig. 9 (10, 11, 12) gezeigte Lagermagazin des 3. (4., 5., 6.) Lagermagazin-Typs so dimensioniert, dass es 4 (2, 2, 1) Lagerschächte 61 aufweist, deren Grundmaße an die passgenaue Aufnahme jeweils eines Verpackungsmoduls des Typs 3 (4, 5, 6) mit Grundflächenmassen von 150 mm x 505 mm (235 mm x 705 mm, 335 mm x 505 mm, 505 mm x 705 mm) angepasst ist.

In allen Fällen passt für jeden Lagermagazin-Typ jeweils eine ganze Zahl von Verpackungsmodulen 50 ohne "Platzverschwendung" in die Lagerschächte 61.

Fig. 14 zeigt schematisch die Verbindung von einem oder mehreren Verpackungsmodulen 50 zu einer Versandverpackung 55. Die Verpackungsmodule können dabei durch Verkleben, Umwickeln mit Folie, oder auf andere Art und Weise miteinander verbunden werden. Etiketten 57 können dabei zur Verklebung beitragen. Vorzugsweise können in zwischen miteinander verbundenen Verpackungsmodulen 50 gebildeten Zwischenräumen Begleitpapiere wie Lieferscheine, Werbematerial etc. untergebracht werden.

In Ausnahmefällen, in denen die Zusammenstellung der einzelnen Verpackungsmodule 50 zu einem versandfähigen Gebilde nicht möglich ist, kann dies durch Hinzufügen von leeren Verpackungsmodulen oder durch Auflegen eines "Deckblatts" bzw. Stülpdeckels auf das größte Verpackungsmodul dennoch erreicht werden.

Fig. 15a) zeigt schematisch eine Vielzahl von Versandverpackungen 55, die zu einem Ladestapel 58 geschichtet sind, der auf einem Ladungsträger wie etwa einer Palette aufliegt. In Fig.15b) ist zusätzlich noch eine Abdeckung 59 des Ladestapels 58 gezeigt. Durch die modularen Rastermaße der Verpackungsmodule 50 können erfindungsgemäß vorteilhaft stabile und raumeffiziente Ladestapel 58 gebildet werden.

Die Erfindung schlägt somit ein Verfahren zur Lagerung und Kommissionierung von Artikeln, insbesondere von Kleinteilen vor, das eine Verringerung des Verbrauchs von Verpackungsmaterial und eine hohe Lagerdichte ermöglicht.

## Patentansprüche

1. Verfahren zur Lagerung und Kommissionierung von Artikeln, insbesondere von Kleinteilen, aufweisend die Verfahrensschritte:
a) Verpackung der Artikel in standardisierten Verpackungsmodulen (50) ausgewählt aus einer Anzahl verschiedener vordefinierter Verpackungsmodul-Typen mit unterschiedlichen Grundflächenmaßen einer bestimmten Rasterung,
b) Lagerung der in den standardisierten Verpackungsmodulen (50) verpackten Artikel in einem Komissionierlager (20),
c) Zusammenstellung der Artikel entsprechend einem erfassten Kommissionierauftrag, wobei eines oder mehrere der Verpackungsmodule (50) zu einer Versandverpackung (55) miteinander verbunden werden, und
d) Versand der Artikel in der Versandverpackung (55) entsprechend dem erfassten Kommissionierauftrag.

2. Verfahren nach Anspruch 1, wobei mehrere Verpackungsmodule (50) des gleichen Typs oder unterschiedlicher Typen bündig zu einer quaderförmigen Versandverpackung (55) verbunden werden.

3. Verfahren nach Anspruch 2, wobei die mehreren Verpackungsmodule (50) durch Verkleben oder Umwickeln miteinander verbunden werden.

4. Verfahren nach einem der vorangehenden Ansprüche, wobei in den Zwischenräumen zwischen miteinander verbundenen Verpackungsmodulen (50) Begleitpapiere wie Lieferscheine, Werbematerial etc. untergebracht werden.

5. Verfahren nach einem der vorangehenden Ansprüche, wobei die verschiedenen Verpackungsmodul-Typen Grundflächenmaße mit einer bestimmten Rasterung der Seitenlängen aufweisen, welche festgelegte Werte L₁, L₂, L₃, ..., Lₙ annehmen können.

6. Verfahren nach Anspruch 6, wobei die verschiedenen Verpackungsmodul-Typen rechteckförmig mit einer kurzen Seite der Länge A und einer langen Seite der Länge B sind, wobei A ausgewählt ist aus L₁, L₂, L₃, ..., Lₙ₋₁ und B ausgewählt ist aus L₂, L₂, L₄, ..., Lₙ, und wobei A < B ist.

7. Verfahren nach einem der vorangehenden Ansprüche, wobei Verpackungsmodule (50) als Kartonverpackungen ausgebildet sind und die jeweilige Höhe der Verpackungsmodule variabel ist.

8. Verfahren nach Anspruch 7, wobei die Höhe des Verpackungsmoduls (50) durch entsprechende Fixierung eines aufgeschobenen Kartondeckels (52) realisiert wird.

9. Verfahren nach Anspruch 7 oder 8, wobei die Innenhöhe des Verpackungsmoduls gleich der maximalen Höhe des darin verpackten Artikels ist.

10. Verfahren nach einem der vorangehenden Ansprüche, wobei die Verpackungsmodule (50) im Lager (100) ausschließlich liegend bewegt werden.

11. Verfahren nach einem der vorangehenden Ansprüche, wobei sich in jedem Verpackungsmodul (50) jeweils nur ein einziger Artikel befindet.

12. Verfahren nach einem der vorangehenden Ansprüche, wobei Verfahrensschritt (a) bei einem Hersteller oder Lieferanten des jeweiligen Artikels ausgeführt wird.

13. Verfahren nach einem der vorangehenden Ansprüche, wobei Verfahrensschritt (a) am Eingang (10) des Komissionierlagers ausgeführt wird.

14. Verfahren nach einem der vorangehenden Ansprüche, wobei Verfahrensschritt c) automatisiert durchgeführt wird.
